# EUROPEAN PATENT APPLICATION

(11) **EP 4 682 730 A1**
(43) Date of publication of application: **21.01.2026**
(21) Application number: 24189553.1
(22) Date of filing: 18.07.2024
(51) Int. Cl.: G06F 13/16, H04J 3/16, H04L 49/90

(54) **DELAY APPARATUS, NETWORK DEVICE AND DELAY METHOD**

(71) Applicant: Adtran Networks SE, 98617 Meiningen (DE)
(72) Inventor: Aygün, Idil, 82061 Neuried (DE); Autenrieth, Achim, 81825 München (DE)
(74) Representative: Bratovic, Nino Maria

(57) **Abstract**

The invention provides an improved apparatus and method for delaying high-speed constant bitrate signals in a programmable manner. For this purpose, a signal is demultiplexed into individual data units, and the data units are temporarily stored in a high bandwidth memory by writing and reading via multi-channel first data transfer. In this way, the temporary storage of data can be achieved without noticeable decrease of memory throughput and without interruption between writing and reading requests.

## Description

### Technical field

The present invention relates to a delay apparatus, in particular a delay apparatus for programmable delaying of high-speed constant bitrate signals. The present invention further relates to a network device with such a delay apparatus. Further, the present invention relates to a delay method, in particular a method for programmable delaying of high-speed constant bitrate signals.

### Background

High-speed signals with a constant bitrate (CBR) are crucial for today's high-speed data transfer demands. Data user expects a seamless data stream which makes high demand for utilization of high-speed CBR signals within data transmission.

For example, optical transport networking (OTN) systems are high-speed CBR networks offering cost-effective and optimized solutions to simplify network operations and to enhance network reliability.

Because of the need for data synchronization and requirements for selection of high-quality data, there is a need for an adjustable delay of high-speed signals, in particular high-speed signals with a constant bitrate. In particular, there is a need for delaying high-speed signals which can be realized by temporal data storage in a related memory without noticeable decrease of throughput and without interruption between read and write requests.

### Summary

The present invention provides a delay apparatus and a delay method with the features of the independent claims. Moreover, a computer program product, a data storage medium, and a data stream are provided. Further advantageous embodiments are subject matter of the dependent claims.

According to a first aspect, a delay apparatus is provided.The delay apparatus comprises a high bandwidth memory (HBM), a HBM controller and at least one processing element. Each processing element comprises an input port, an output port, a demultiplexer, a multiplexer and a connection to the memory controller. The input port is configured to receive a high-speed constant bitrate signal. The output port is configured to send a delayed high-speed constant bitrate signal. The demultiplexer is configured to demultiplex the high-speed constant bitrate signal received by the input port. In this way, demultiplexed data are obtained. The memory controller is configured to write the demultiplexed data to the HBM. Further, the memory controller is configured to read the demultiplexed data stored in the HBM. Especially, the writing and reading is performed via a multi-channel burst data transfer. The multiplexer is configured to multiplex the demultiplexed data which are read from the HBM. In this way, the delayed high-speed constant bitrate signal is obtained.

According to a further aspect, a network device is provided. The network device comprises a first input interface, a second input interface, an output interface and a delay apparatus according to the first aspect. The first input interface is configured to receive a first high-speed constant bitrate signal. The second input interface is configured to receive a second high-speed constant bitrate signal. The first high-speed constant bitrate signal and the second high-speed constant bitrate signal both may transmit a same data stream comprising, or consisting of, identical data from a common data source. Alternatively, it is also possible that the first high-speed constant bitrate signal and the second high-speed constant bitrate signal are data streams with a same high speed constant bitrate which transmit different data, for example data from different data sources. The second high-speed constant bitrate signal is delayed in relation to the first high-speed constant bitrate signal. The delay apparatus is configured to delay the first high-speed constant bitrate signal. Especially, a delay which is applied by the delay apparatus corresponds to the delay between the second high-speed constant bitrate signal and the first high-speed constant bitrate signal. The output interface is configured to output either the second high-speed constant bitrate signal or the delayed first high-speed constant bitrate signal.

According to still a further aspect, a delay method is provided. The delay method comprises a step of receiving a high-speed constant bitrate signal. Further, the method comprises demultiplexing the received high-speed constant bitrate signal to obtain demultiplexed data. The method further comprises writing the demultiplexed data to a high bandwidth memory (HBM). Further, the method comprises reading the demultiplexed data stored in the HBM after a delay. In particular, the writing and reading is performed via a multi-channel burst data transfer. The method further comprises multiplexing the demultiplexed data which are read from the HBM to obtain a delayed high-speed constant bitrate signal. Finally, the method comprises sending the delayed high-speed constant bitrate signal.

The present invention is based on the finding that the reliability of a transmission can be improved by using multiple redundant transmission lines in parallel. However, due to different lengths of the different transmission lines or due to other reasons, reception of data by one transmission line may be delayed with respect to reception of corresponding data by another transmission line. Thus, in order to maintain a seamless data stream between multiple transmission lines it is necessary to delay earlier received data so that the timing of the data from all transmission lines corresponds to each other. For such a delay, data may be written into a memory and read from this memory at a later point in time according to the desired delay. In case of signal lines with a high data rate, the data have to be written into the memory and read from the memory with high data rates.

In this connection, the present invention further has identified the problem that an achievable throughput of conventional operations for writing data to memory and reading data from a memory may be limited. Especially, the practically achievable throughput per memory channel may be significantly smaller than an input rate of the data from a channel to be delayed.

The present invention therefore takes into account these findings and aims to provide an improved scheme for delaying high-speed signals with a constant bitrate. Especially, the present invention is based on the idea of splitting/demultiplexing the data of a data stream into individual data elements, for example, frames.

Accordingly, the demultiplexed individual data units may be written into a memory and read from this memory via a plurality of interfaces/pseudo channels. Hence, the performance for writing data into the memory and reading from the memory can be improved by using these multiple interfaces/pseudo channels in parallel. In this way, it is possible to achieve a data exchange between the input and output terminals of the delay device on the one hand side and the memory for storing the data to be delayed on the other hand side, which can realize a continuous throughput for delaying the high-speed constant bitrate signal.

For temporarily storing the data to be delayed, a high bandwidth memory (HBM) is used. Such an HBM provides capabilities for inputting and outputting a larger amount of data compared with other conventional memory types. Further to this, the data can be input and output via multiple pseudo channels in line with the above-described concept.

Based on the above-described approach, the data to be delayed are temporarily stored in the HBM by a multi-channel first data transfer. In other words, the data of the high-speed signal are separated into individual data units, each data unit is assigned to one of multiple channels and written into the HBM through the respective channel. Further, after the desired delay time, the data are read from the HBM through one of multiple channels and subsequently, the read data are combined (multiplexed) to form the delayed signal. Since the data transfer to and from the HBM is performed by multiple channels, the limitation for writing and reading data to/from the memory can be overcome. Hence, the multi-channel first data transfer can achieve an appropriate memory throughput during the delaying of the high-speed signal. Especially, there is no noticeable decrease of memory throughput and no interruption between write and read request.

Further embodiments of the present invention are subject-matter of the further sub-claims and of the following description referring to the drawings.

In a possible embodiment, each demultiplexer is configured to divide a high-speed constant bitrate signal into data segments having a same predetermined size. Accordingly, each multiplexer may be configured to combine data segments to form a delayed high-speed constant bitrate signal. Especially, as size of each data segment may correspond to the capability of the memory controller for writing and reading such a data segment to the HBM in one task.

In a possible embodiment, each segment unit is a frame of the high-speed constant bitrate signal. Since the data in a high-speed constant bitrate signal usually are already segmented by individual frames, such a segmentation of data units by individual frames can be applied very easily.

In a possible embodiment, each processing element comprises a number of input buffers and a (same) number of output buffers. Each input buffer may be configured to buffer a single data segment provided by the demultiplexer. Accordingly, each output buffer may be configured to buffer a data segment read from the HBM. In this way, the reception of the data by the constant bitrate signal and the writing to the HBM as well as the reading from the HBM and the outputting of the delayed signal can be decoupled.

In a possible embodiment, each processing element comprises a number of input buffers and a number of output buffers. By using these input buffers and output buffers, the reading and writing operations can be performed in such a manner that the data throughput to and from the HBM via the individual data channels can be performed without noticeable decrease of throughput and without interruption between write and read requests.

In a possible embodiment, each demultiplexer is configured to provide the demultiplexed data segments cyclically to one of the input buffers. Accordingly, each multiplexer may be configured to obtain the data segments cyclically from one of the output buffers. In other words, the writing and reading operations are performed according to a round robin scheme.

In a possible embodiment, each processing element comprises a number of Advanced eXtensible Interface (AXI) modules. Each AXI module may be configured to forward data from an input buffer to related HBM pseudo channels or forward data from HBM pseudo channels to a related output buffer. Such AXI modules are suitable for the transfer of data between the buffers and the HBM.

In a possible embodiment, each input port is configured to be connected to an optical receiver of an optical transport network. Accordingly, each output port may be configured to be connected to an optical transmitter of the optical transport network. Accordingly, optical transmitter, receiver and/or transceivers may be provided in association with the input port and/or output port. In this way, the delay apparatus may be used for an optical transport network (OTN) system.

In a possible embodiment, the high-speed constant bitrate signal comprises Optical Data Channel Unit 4 (ODU4) frames of an optical transport network (OTN) system. Signals comprising such data frames usually provide a transmission by high-speed constant bitrate signals for which the delay according to the concept of the present invention can be well applied. However, the delay apparatus may be also used for any other appropriate high-speed constant bitrate signals.

In a possible embodiment, the delay of the delay apparatus is adjustable. Especially, the delay may be adapted individually for each signal to be delayed. For example, the delay may be adapted in such a manner that a sum of a propagation delay and the additionally applied delay which is applied by the delay apparatus corresponds to a propagation delay of a further signal, for example a redundant signal.

In a possible embodiment of the network device, the network device may comprise a switch. The switch may be configured to hitless switch between the delayed first high-speed constant bitrate signal and the second high-speed constant bitrate signal. In this way, the output of the network device can be seamless switched between all redundantly received same signals.

The invention also provides, according to a fourth aspect, a computer program product comprising executable program code configured to, when executed by a computing device, perform the method according to any embodiment of the delay method of the present invention.

The computing device may be realized as any device, or any means, for computing, in particular for executing a software, an app (computer application), or an algorithm. For example, the computing device may comprise at least one processing unit such as at least one central processing unit, CPU, and/or at least one graphics processing unit, GPU, and/or at least one field-programmable gate array, FPGA, and/or at least one application-specific integrated circuit, ASIC, and/or any combination of the foregoing. The computing device may further comprise a working memory operatively connected to the at least one processing unit and/or a non-transitory memory operatively connected to the at least one processing unit and/or the working memory.

The computing device may be implemented partially and/or completely in a local apparatus and/or partially and/or completely in a remote system such as by a cloud computing platform.

The invention also provides, according to a fifth aspect, a computer-readable, non-transient data storage medium comprising executable program code configured to, when executed by a computing device, perform the method according to any embodiment of the delay method of the present invention.

The invention also provides, according to a sixth aspect, a data stream comprising, or configured to generate, executable program code configured to, when executed by a computing device, perform the method according to any embodiment of the delay method of the present invention.

### Brief description of the drawings

For a more complete understanding of the present invention and advantages thereof, reference is now made to the following description taking in conjunction with the accompanying drawings. The invention is explained in more detail below using exemplary embodiments, which are specified in the schematic figures of the drawings, in which:
Fig. 1: shows a schematic illustration of a data transfer scheme;
Fig. 2: shows a schematic illustration of a configuration for a delay apparatus according to an embodiment;
Fig. 3: shows a schematic illustration of a configuration for a delay apparatus according to a further embodiment;
Fig. 4: shows a more detailed illustration of delay apparatus according to an embodiment;
Fig. 5: shows a configuration of a processing element of a delay apparatus according to an embodiment;
Fig. 6: shows a timing diagram illustrating writing and reading operations of a delay apparatus according to an embodiment;
Fig. 7: shows a flow diagram illustrating a method for delaying high-speed constant bitrate signals underlying an embodiment of the present invention;
Fig. 8: shows a schematic block diagram illustrating a computer program product according to an embodiment; and
Fig. 9: shows a schematic block diagram illustrating a data storage medium according to another embodiment.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown in scale.

In the drawings, same, functionally equivalent and identical operating elements, features and components are provided with same reference signs in each case, unless stated otherwise.

### Description of embodiments

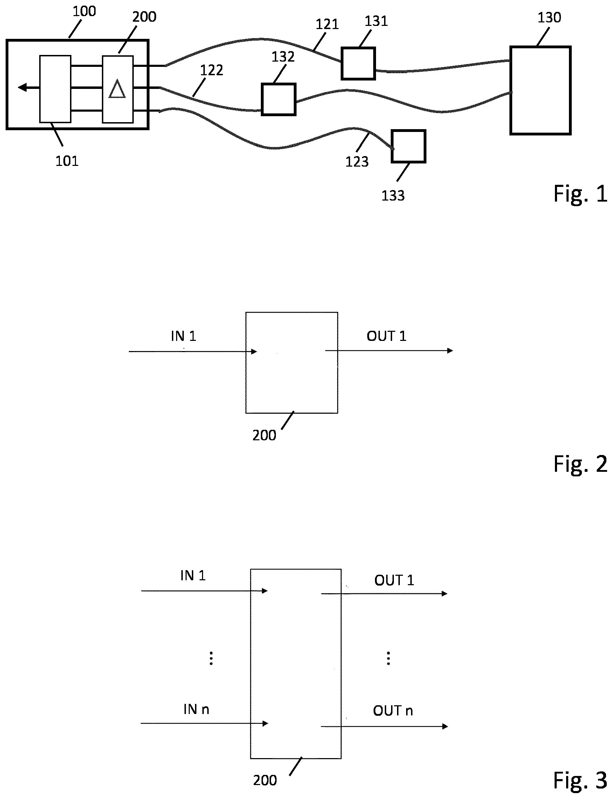

Figure 1 shows a schematic illustration of a high-speed constant bitrate signals transfer scheme in which a delay apparatus 200 according to an embodiment may be used. For example, the delay apparatus 200 may be used in a network device 100.

In this transfer scheme, a data transmission may be performed from a sending device 130 to a receiving network device 100. The data transmission may be performed via at least two local units 131, 132 in which each local unit 131, 132 locates at a different spatial location. Due to different lengths and/or other properties of the respective transmission paths 121, 122 the propagation delay through respective paths 121, 122 may be different. Thus, even if the sending network device 130 simultaneously sends same signals through the transmission paths 121, 122, there will be a temporal difference between the point in time when a data element is received at receiving network device 100 for each transmission path 121, 122. However, in order to realize a seamless switching between the signals received by the transmission paths 121, 122, receiving network device 100 has to apply a delay of the signal having the shorter provocation delays so that a sum of the propagation delay and the additionally applied delay equals to the propagation delay of the transmission path having the longest propagation delay. For this purpose, network device 100 may comprise a delay apparatus 200 which is capable of performing such a delaying especially for high-speed constant bitrate signals. In other words, the delay apparatus 200 is capable of performing such a delay on previously received data so that the timing of the data from all transmission lines 121, 122 corresponds to each other. The local units 131, 132 may send same data to provide seamlessly change for the redundant transmission between different lines 121, 122 in which the one or more of data transmission lines 121, 122 may fail or have a high error rate. In such a scenario, a switch 101 may perform a seamless switching between the data streams transmitted via the different transmission lines 121, 122. However, it is understood, that the delay apparatus 200 may also be used for any other application in connection with an appropriate delay. Hence, the use of a switch 101 may be only an optional example without limiting the present invention.

Further, the local units 131, 132 and/or another local unit 133 may send different data for another reason in which the main unit 100 needs to delay earlier received data to perform a task at the same time for each different line 121, 122, 123. As illustrated, for example, by the additional local unit 133, it may be possible that the delay apparatus 100 receives data which originate from different data sources. In this example, some data may be generated by the local unit 133. It may be also possible that the local unit 131 and/or 132 also may generate any kind of additional data which are provided to the network device 100. Further, it may be possible that a local unit 131, 132 may receive data from the sending device 130 and apply modification to the received data before forwarding the data to the network device 100. Network device 100 may receive data from some or all local unit 131, 132, 133. In order to synchronize the data streams with each other, delay apparatus 200 may apply an appropriate delay, especially a delay so that a timing of the data elements, e.g. data packets in the individual data streams match each other.

These exemplary applications for delaying of a high-speed signal with a constant bitrate shall be understood only as examples for a better understanding of the present invention. However, the present invention is not limited to these examples and the general approach for delaying a high-speed signal with a constant bitrate may be also applied for any other kind of application.

Figure 2 shows a schematic drawing illustrating the general concept of a delay apparatus 200 according to an embodiment. A data signal IN 1, in particular a high-speed signal having a constant bitrate, may be received by an input port. The signal is delayed, and the delayed signal OUT 1 is provided at an output port. In general, the signal which is to be delayed by a delay apparatus 200 may be any kind of high-speed constant bitrate signal. For example, the signal may be a signal comprising ODU4 frames. However, the general concept for delaying high-speed signals with a constant bitrate may be also applicable to other appropriate data signal.

Figure 3 shows a schematic drawing illustrating the concept of a delay apparatus 200 according to a further embodiment. The delay apparatus 200 in this embodiment differs from the previously described embodiment in that delay apparatus 200 comprises multiple input ports for receiving high-speed constant bitrate signals IN 1 to IN n. Especially, each input port may receive an individual high-speed constant bitrate signal. Delay apparatus 200 may apply an individual delay to each signal received by any of the input ports. The delayed signals OUT 1 to OUT n are also provided at the related output ports of the delay apparatus 200.

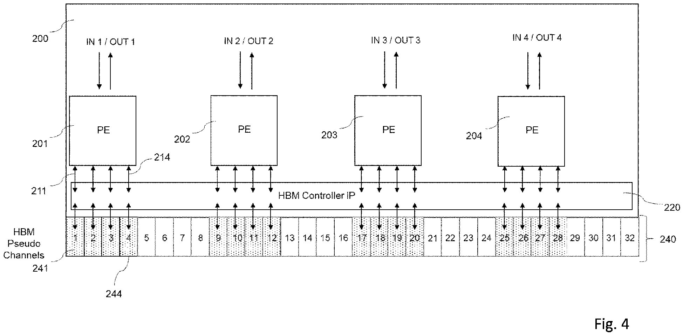

Figure 4 shows a schematic drawing illustrating the concept of a delay apparatus 200 in more detail. Even though the example in figure 4 shows a delay apparatus 200 for delaying a number of four high-speed constant bitrate signals, the present invention is not limited to this particular example. Moreover, delay apparatus 200 may be configured for delaying any other appropriate number of signals, too.

As can be seen in figure 4, delay apparatus 200 may comprise a high bandwidth memory (HBM) 240 with a number of HBM pseudo channels, e.g. pseudo channels 241 to 244. Further, delay apparatus 200 comprises multiple processing elements 201-204. In particular, an individual processing element 201-204 is provided for each signal to be delayed. The data transfer between the processing elements 201-204 is performed by an HBM controller IP 220.

Accordingly, each processing elements 201-204 writes the data of the received high-speed constant bitrate signal through HBM controller IP 220 to one of the pseudo channels 241- 244 of HBM 240. After the desired delay time, the respective processing element 201-204 reads the data back from the HBM 240 through one of the pseudo channels 241-244 and outputs of the respective delayed data.

Since the achievable data transfer by means of a conventional data exchange to/from a memory usually can provide a data throughput which is smaller than the input rate of the data received by the processing elements 201-204, a particular approach for writing and reading the data to/from the HBM 240 is applied. For this purpose, the data comprised by the received high-speed constant bitrate signal is divided into individual data units, for example frames. The high-speed constant bitrate signal is demultiplexed, i.e. divided into multiple data units. The data of each data unit is written to the HBM 240 through one of the multiple channels. After the desired delay time, the respective data units are read from the HBM 240 through the multiple channels and multiplexed, i.e. combined, to form the delayed high-speed signal with constant bitrate. Thus, by using multiple channels for writing and reading the data units, the overall data throughput can be increased even if the achievable throughput per memory channel is smaller than the input rate of the high-speed constant bitrate signal received by the processing elements 201-204.

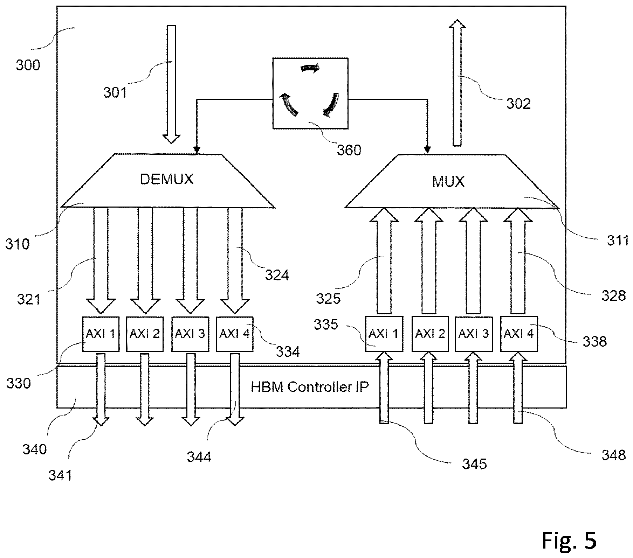

Figure 5 shows a schematic illustration of a processing element 300 according to an embodiment. As already mentioned above, a signal such as a high-speed constant bitrate signal may be received by an input port 301. For example, the signal may be a signal of an ODU4 path.

The signal is provided to a demultiplexer 310. The demultiplexer 310 demultiplexes the signal into data units. In other words, the demultiplexer 310 separates the continuous data stream into individual data units. The data units may be, for example, individual frames of the data stream. However, any other kind of data unit may be possible, too. The individual data units are provided to one of a number of input buffers 321-324. Preferably, a number of four input buffers is provided. However, any other number, especially more than four input buffers may be possible, too. In particular, the data units are cyclically provided to the input buffers 321-324. From the input buffers 321-324, the data units are present to the pseudo channels 341-344 of the HBM 240 to related Advanced eXtensible Interface (AXI) modules 331-334 and through the HBM controller IP 340. In other words, the demultiplexed data units are cyclically written to the HBM 240 through on of the multiple input buffers 321-324, AXI modules 331-334 and pseudo channels 341-344.

The data is read out after the desired delay in an analogue manner by pseudo channels 345-348, AXI modules 335-338 and output buffers 325-328. Accordingly, a data unit is read from a pseudo channel 345-348, HBM controller IP 340, a related AXI module 335-338 to a corresponding output buffer 325-328. After this, the multiplexer 311 multiplexes the data units of the output buffers 325-328 to form the delayed output signal.

Output buffers 325-328 may be capable of storing a single data unit or up to a predetermined number of data units. In this way, the data units can be output exactly at a time that corresponds to the desired delay, even if the desired delay amount is not an integer multiple of the number of data channels.

The overall operation of the processing element 300 may be controlled by a scheduler 360. This scheduler may control the writing and reading operations to/from the HBM 240. In this way, scheduler 360 may control the desired delay. Especially, scheduler 360 may receive a command for configuring a desired delay. Hence, adjustable/programmable delay of the signal can be applied by the processing elements 300.

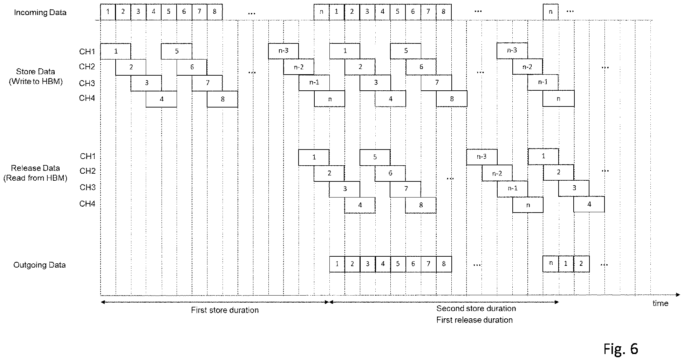

Figure 6 shows a schematic illustration of the timing diagram illustrating the write and read operations to/from the HBM by means of the multiple data channels formed by input buffers 321-324, related AXI modules 331-334 and HBM pseudo channels 341-344 for writing and by output buffers 325-328, related AXI-modules 335- 338 and HBM pseudo channels 345-348 for reading.

In the upper part of figure 6, the reception of the incoming data units, e.g. ODU4 frames, is shown. The signal is to be delayed by a time that corresponds to a transmission of n frames.

In the next section below, the operations for storing the data units through the individual channels CH1-CH4 is illustrated. As already mentioned above, a data channel CH1-CH4 is formed by one of the input buffers 321-324, related AXI modules 331-334 and HBM pseudo channels 341-344 for writing. Due to the limitations in the throughput of the respective channels, a writing operation requires a longer time than the transmission time of a single data unit of the high-speed constant bitrate signal which is to be delayed. This is illustrated by the fact that the respective writing operation extends over the reception time for two data units.

A subsequently received data unit is written through a further channel CH1-CH4. Especially, the writing operations are cyclically performed by the available number of channels CH1-CH4.

After the desired delay, the data units are read from the HBM through the multiple channels CH1-CH4. The reading of the data units is also performed by cyclically reading through all available data channels CH1-CH4. Since each reading operation also takes longer period of time than the time for transmitting a single data unit, this is also illustrated by a reading operation extending over the transmission period of two data units.

As can be further seen in figure 6, a reading operation by one of the data channels CH1-CH4 is performed in a period in which no write operation is performed. Accordingly, same AXI modules 331-338 and pseudo channels 341-348 can be used for writing and reading.

Finally, the read data units are multiplexed, i.e. combined, to form the delayed signal, as shown in the bottom section of figure 6.

Hence, in order to perform the desired programmable delay, the HBM has to provide an appropriate storage capacity which corresponds at least to a number of data units received during the desired delay.

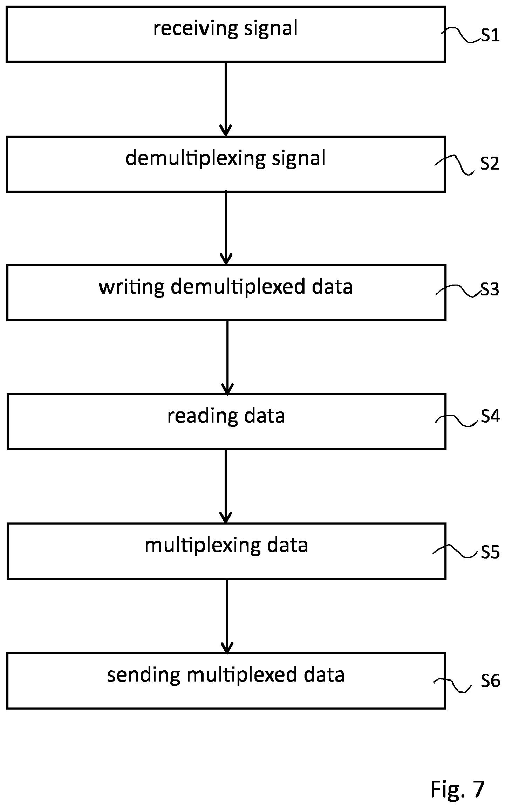

Figure 7 shows a flow diagram illustrating a method for delaying high-speed constant bitrate signals underlying an embodiment of the present invention. It is understood, that this method may comprise any step which is appropriate for performing operations as already described above in connection with the delay apparatus. Accordingly, the above-described delay apparatus and network device 100 may comprise any element, unit or device which could be appropriate for performing an operation in accordance with the method steps as described below.

The method may comprise a step S1 for receiving a high-speed constant bitrate signal. The high-speed constant bitrate signal may comprise, for example, ODU4 frames.

The method further comprises a step S2 for demultiplexing the received high-speed constant bitrate signal. In this way, demultiplexed data are obtained. The demultiplexed data may be data in individual data segments, such as frames or the like.

The method further comprises a step S3 of writing the demultiplexed data to HBM 240. Further, the method comprises a step S4 of reading the demultiplexed data stored in the HBM 240 after a predetermined delay. The delay may be adjustable, especially programmable. The writing and reading are performed via a multi-channel burst data transfer. This multi-channel burst data transfer may be performed as already described above in connection with the delay apparatus.

Further, the method comprises a step S5 of multiplexing the demultiplexed data which are read from the HBM 240. In this way, a delayed high-speed constant bitrate signal is obtained. The delayed high-speed constant bitrate signal is sent in step S6.

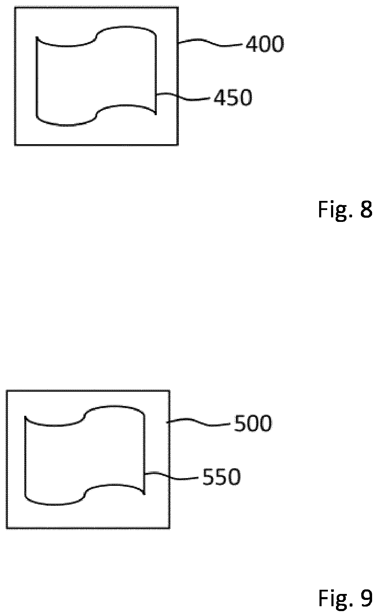

Figure 8 shows a schematic block diagram illustrating a computer program product 400 according to an embodiment of the third aspect of the present invention. The computer program product 400 comprises executable program code 450 configured to, when executed (by a computing device), perform the method according to any embodiment of the delay method of the present invention, in particular as has been described with respect to the preceding Figures.

Figure 9 shows a schematic block diagram illustrating a non-transitory computer-readable data storage medium 500 according to an embodiment of the fifth aspect of the present invention. The data storage medium 500 comprises executable program code 550 configured to, when executed (by a computing device), perform the method according to any embodiment of the delay method of the present invention, in particular as has been described with respect to the preceding Figures.

The non-transient computer-readable data storage medium 500 may comprise, or consist of, any type of computer memory, in particular semiconductor memory such as a solid-state memory. The data storage medium may also comprise, or consist of, a CD, a DVD, a Blu-Ray-Disc, an USB memory stick or the like.

Summarizing, the present invention provides an improved apparatus and method for delaying high-speed constant bitrate signals in a programmable manner. For this purpose, a signal is demultiplexed into individual data units, and the data units are temporarily stored in a high bandwidth memory by writing and reading via multi-channel first data transfer. In this way, the temporary storage of data can be achieved without noticeable decrease of memory throughput and without interruption between writing and reading requests.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

## Claims

1. A delay apparatus (200) for delaying high-speed constant bitrate signals, comprising:
a high bandwidth memory, HBM (240);
a memory controller (220, 340); and
at least one processing element (201-204, 300), comprising:
an input port (301) configured to receive a high-speed constant bitrate signal;
an output port (302) configured to send a delayed high-speed constant bitrate signal;
a demultiplexer (310) configured to demultiplex the high-speed constant bitrate signal received by the input port (301) to obtain demultiplexed data; and
a multiplexer (311) configured to multiplex demultiplexed data which are read from the HBM (240) to obtain the delayed high-speed constant bitrate signal,
wherein the memory controller (220, 340) is configured to write the demultiplexed data to the HBM (240), and to read the demultiplexed data stored in the HBM (240), and
wherein the writing and reading are performed via a multi-channel burst data transfer.

2. The delay apparatus (200) according to claim 1, wherein each demultiplexer (310) is configured to divide a high-speed constant bitrate signal into data segments having a same predetermined size; and
wherein each multiplexer (311) is configured to combine data segments to form a delayed high-speed constant bitrate signal.

3. The delay apparatus (200) according to claim 2, wherein each segment unit is a frame of the high-speed constant bitrate signal.

4. The delay apparatus (200) according to any of claims 1 to 3, each processing element (201-204, 300) comprising
a number of input buffers (321-324), each input buffer (321-324) being configured to buffer a data segment provided by the demultiplexer (310); and
a number of output buffers (325-328), each output buffer (325-328) being configured to buffer a data segment read from the HBM (240).

5. The delay apparatus (200) according to any of claims 1 to 4, wherein each processing element (201-204, 300) comprises at least four input buffers (321-324) and at least four output buffers (325-328).

6. The delay apparatus (200) according to claim 5, wherein each demultiplexer (310) is configured to provide the demultiplexed data segments cyclically to one of the input buffers (321-325); and
wherein each multiplexer (311) is configured to obtain the data segments cyclically from one of the output buffers (325-328).

7. The delay apparatus (200) according to any of claims 4 to 6, wherein each processing element (201-204, 300) comprises a number of Advanced eXtensible Interface, AXI, modules (331-338), each AXI module (331- 338) being configured to forward data from an input buffer (321-325) to related HBM pseudo channels (341-344) or forward data from HBM pseudo channels (345-348) to a related output buffer (325-328).

8. The delay apparatus (200) according to any of claims 1 to 7, wherein each input port (301) is configured to be connected to an optical receiver of an optical transport network, and wherein each output port (302) is configured to be connected to an optical transmitter of the optical transport network.

9. The delay apparatus (200) according to any of claims 1 to 8, wherein the high-speed constant bitrate signal comprises Optical Data Channel Unit 4, ODU4, frames.

10. A network device (100), comprising:
a first input interface configured to receive a first high-speed constant bitrate signal;
a second input interface configured to receive a second high-speed constant bitrate signal, wherein the first high-speed constant bitrate signal and the second high-speed constant bitrate signal transmit a same data stream, and wherein the second high-speed constant bitrate signal is delayed in relation to the first high-speed constant bitrate signal;
a delay apparatus (200) according to any of claims 1 to 9, wherein the delay apparatus (200) is configured to delay the first high-speed constant bitrate signal, and wherein a delay which is applied by the delay apparatus corresponds to the delay between the second high-speed constant bitrate signal and the first high-speed constant bitrate signal; and
an output interface configured to output either the second high-speed constant bitrate signal or the delayed first high-speed constant bitrate signal.

11. The network device (100) comprising a switch (101) configured to perform hitless switching between the delayed first high-speed constant bitrate signal and the second high-speed constant bitrate signal.

12. A delay method for delaying high-speed constant bitrate signals, comprising:
receiving (S1) a high-speed constant bitrate signal;
demultiplexing (S2) the received high-speed constant bitrate signal to obtain demultiplexed data;
writing (S3) the demultiplexed data to a high bandwidth memory, HBM (240);
reading (S4) the demultiplexed data stored in the HBM (240) after a delay, wherein the writing and reading is performed via a multi-channel burst data transfer;
multiplexing (S5) the demultiplexed data which are read from the HBM (240) to obtain a delayed high-speed constant bitrate signal; and
sending (S6) the delayed high-speed constant bitrate signal.

13. The delay method according to claim 12, wherein the delay is adjustable.

14. A computer program product (400) comprising executable program code (450) configured to, when executed, perform the delay method of claim 12 or claim 13.

15. A non-transient, computer-readable data storage medium (500) comprising executable program code (550) configured to, when executed, perform the delay method of claim 12 or claim 13.
